# EUROPEAN PATENT APPLICATION

(11) **EP 2 105 486 A1**
(43) Date of publication of application: **30.09.2009**
(21) Application number: 08153229.3
(22) Date of filing: 25.03.2008
(51) Int. Cl.: C10B 53/00, C10B 53/02, C10B 49/00

(54) **Low total acid number bio-crude**

(71) Applicant: KiOR Inc., 3871 KM Hoevelaken (NL)
(72) Inventor: O'Connor, Paul, 3871 KM Hoevelaken (NL); Daamen, Sjoerd, 08017 Barcelona (ES); Corma Camos, Avelino, 46022 Valencia (ES)
(74) Representative: Rasser, Jacobus Cornelis

(57) **Abstract**

Disclosed is a pyrolysis product of a biomass material. This product, referred to as bio-crude, has a total acid number (TAN) of less than 10, and is suitable for processing in stainless steel equipment.

A process for making the bio-crude comprises pyrolysis of a biomass in the presence of a particulate catalyst.

The TAN of the bio-crude may be reduced further by reducing the bio-crude with coke and or CO produced in the process.

## Description

### BACKGROUND OF THE INVENTION

### 1. Field of the Invention

The invention relates generally to a bio-crude having a low total acid number (TAN), and more particularly to a bio-crude suitable for processing in stainless steel. In a preferred embodiment the bio-crude is suitable for processing in carbon steel and/or other conventional equipment.

### 2. Description of the Related Art

It is desirable to develop processes for producing liquid fuels from renewable resources. Biomass, in particular ligno-cellulosic biomass, is an abundantly available renewable resource. Processes have been proposed for converting such biomass to liquid products, variously referred to as bio-oils or pyrolysis oils. Many such processes comprise the pyrolysis of biomass, i.e., heating of biomass materials to temperatures exceeding, typically, 400 °C under an oxygen-free or oxygen-poor atmosphere.

Pyrolysis processes generally produce gas, a liquid fraction, and char or coke. The liquid fraction, which shall herein be referred to as pyrolysis oil. Pyrolysis oils are characterized by a high oxygen content, a high Total Acid Number ("TAN"), and a low pH. These properties make pyrolysis oils unsuitable for transport and processing in stainless steel equipment, such as standard oil refinery equipment, pipelines and other transport media. Due to their low pH these acidic pyrolysis oils can cause corrosion of stainless steel, and during processing the dissolving and/or leaching of the carriers and/or metal components out of refinery catalysts.

WO 2006/037368 discloses a process for reducing the TAN of sour mineral crudes. The process comprises contacting the mineral crude with an adsorbent comprising an anionic clay or a heat-treated form thereof under agitation and under a flow of inert gas at a temperature in the range of 200 to 500 °C. The process is suitable for treating mineral crudes having a TAN of < 10, preferably 2 to 5. This prior art process is unsuitable for the processing of pyrolysis oils, which have TAN values of more than 30, often more than 70.

Thus, there is a particular need for bio-crudes having a TAN value of less than 10, so that they may be processed in conventional refinery equipment, either by themselves or blended with mineral crudes. Accordingly, there is a need for a process for converting biomass to a bio-crude having a TAN value of less than 10.

### BRIEF SUMMARY OF THE INVENTION

The present invention addresses these problems by providing a bio-crude suitable for processing in stainless steel equipment **characterized in that** the Total Acid Number (TAN) of the bio-crude is less than 10.

Another aspect of the invention comprises a process for preparing the bio-crude, said process comprising the steps of (i) pyrolyzing a biomass material in the presence of a catalyst to form a bio-crude; and (ii) optionally reducing the TAN of the bio-crude by adding a base.

In yet another aspect of the invention the process comprises the additional step of (iii) converting the bio-crude to a liquid fuel in a conventional refinery process unit.

### BRIEF DESCRIPTION OF THE DRAWINGS

The features and advantages of the invention will be appreciated upon reference to the following drawings, in which:

FIG. 1 is a graph showing the correlation between the percentage of deoxygenation of a bio-crude and its TAN value.

FIG. 2 is a schematic representation of a process for reducing the TAN of a bio-crude.

Fig. 3 is a graph showing the TAN values of various wood pyrolysis products as a function of the calculated oxygen content.

### DESCRIPTION OF ILLUSTRATIVE EMBODIMENTS

The following is a description of certain embodiments of the invention, given by way of example only and with reference to the drawings.

The invention relates to a bio-crude suitable for processing in stainless steel equipment, preferably in carbon steel equipment.

The term "biomass" as used herein refers to any carbon-based energy carrier from a renewable resource. More specifically the term refers to such materials derived from plants, either aquatic or land-based plants. The invention will be illustrated with reference to biomass of ligno-cellulosic origin, but it will be understood that any form of biomass is usable.

The term "biomass of ligno-cellulosic origin" refers to biomass comprising significant quantities of cellulose and/or hemicellulose, and lignin. Examples include wood, straw, grass, bagasse, corn husks, and the like.

The term "pyrolysis oil" refers to the liquid product resulting from the pyrolysis of biomass. The term as used herein refers to such liquid products having a total acid number ("TAN") of more than 40.

The term "bio-crude" refers to the liquid product resulting from the pyrolysis of biomass having a TAN of 40 or less.

The total acid number, or TAN, is defined as the amount of base, expressed as mg KOH, necessary to neutralize the acids present in a feedstock. The TAN is a well-known parameter used to characterize the acidity of mineral crudes, and fractions of mineral crudes.

The pH of a bio-crude or pyrolysis oil, as referred to herein, is measured upon a 20-fold dilution with water.

Biomass of any origin differs from mineral crude in that the former has a much higher oxygen content than the latter. A "sweet" crude consists almost entire of hydrocarbons and is, accordingly, almost oxygen-free. Even "sour" crudes have relatively small amounts of oxygen. Biomass, taking a ligno-cellulosic biomass as an example, contains large amounts of oxygen. Cellulose has the empirical formula C₆H₁₀O₅, Hemi-cellulose, which is chemically identical to cellulose, has the same oxygen content. Lignin, with the approximate empirical formula C₄₀H₄₈O₁₅, is somewhat less oxygen rich than (hemi-)cellulose, but also contains much more oxygen than even the most sour mineral crude.

Prior art processes for the pyrolysis of biomass comprise the heating of biomass in an oxygen-poor or oxygen-free atmosphere. An inert material, such as sand, may be used as a heat carrier. Some proposes processes involve impregnation of the biomass with a solution of a basic material, such as sodium carbonate or potassium carbonate.

The reaction products of a pyrolysis reaction includes a gaseous phase, a liquid phase (pyrolysis oil), and coke or char. The gaseous phase comprises CO₂, and sometimes CO as well. The coke or char is oxygen-poor. Most of the oxygen from the biomass stays behind in the pyrolysis oil.

The oxygen in the pyrolysis oil is predominantly present in the form of organic acids. The high oxygen content is undesirable for several reasons. It reduces the heat value of the pyrolysis oil. The high acidity (and low pH) of the pyrolysis oil makes it corrosive, and unsuitable for processing in stainless steel equipment. Pyrolysis oil is also incompatible with metal-containing catalysts used in the hydrotreatment units of oil refineries, because the metals tend to be leached from the catalysts by the acidic pyrolysis oil.

The present invention provides pyrolysis products of biomass having a TAN value of 30 or less. These pyrolysis products are referred to herein as "bio-crudes". In a preferred embodiment the bio-crude of the present invention has a TAN of less than 10, more preferably less than 5, still more preferably less than 1.

The pH of the bio-crude is qualitatively connected to the TAN, in the sense that the pH increases as the TAN decreases. There is, however, not a perfect quantitative correlation, because the pH of a bio-crude is a function of both the amount of acid present in the crude, and the pKₐ values of these acids. Preferred herein are bio-crudes having the above-defined TAN values, as well as a pH of greater than 3.5.

Bio-crudes having the above-defined TAN values and a pH greater than 3.5 are suitable for processing in conventional refinery equipment. The bio-crude may be processed in a conventional oil refinery as-is, or blended with a hydrocarbon feedstock of mineral origin. For blending of small quantities of bio-crude into a predominantly mineral feedstock TAN values of the bio-crude of up to 10 may be acceptable. For use as-is, the bio-crude should have a lower TAN, less than 5, preferably less than 1. These higher grades of bio-crude are also preferred for blending, because they may be used in any blending ratio.

The bio-crude of the present invention can be prepared by a process comprising the steps of (i) pyrolyzing a biomass material in the presence of a catalyst to form a bio-crude; and (ii) optionally reducing the TAN of the bio-crude by adding a base. The second step is necessary if the bio-crude resulting from step (i) has a TAN of greater than 10, and optional if the bio-crude resulting from step (i) has a TAN between 1 and 10.

In one embodiment he catalyst used in the process comprises a particulate inorganic material. The catalyst may comprise a salt of an alkali metal or an earth alkaline metal, which preferably is in a particulate form. Suitably such salt comprises K and/or Na. Suitably such salt comprises the CO₃²⁻ anion. Particulate sodium and potassium carbonate are preferred catalysts for the process of this invention.

Suitably the catalyst comprises a hydrotalcite. The term "hydrotalcite" as used herein refers to hydrotalcite per se, that is, the aluminum-magnesium hydroxycarbonate of the formula Mg₆Al₂(CO₃)(OH)₁₆ •4H₂O, as well as the so-called hydrotalcite-like materials having a crystal structure and an X-ray diffraction pattern similar to that of hydrotalcite. It will be understood that, at temperatures of 400 °C and higher, the hydrotalcites are converted to mixed metal oxides. For some of the reaction conditions the actual catalytic material may be a mixed oxide, even though a hydrotalcite was used as the starting material.

It will be understood also that hydrotalcites and mixed metal oxides may convert to the corresponding carbonates in the presence of CO₂. Significant portions of catalyst material recycled from the regenerator can be expected to be in the form of carbonates.

It is desirable to create an intimate contact between the biomass and the particulate catalyst by a mechanical technique, such as co-milling, co-grinding, kneading, etc. This step may advantageously be combined with a particle size reduction of the biomass material.

In another embodiment the catalyst used in the process comprises a dissolved inorganic hydroxide or salt. Suitable examples include the salt and hydroxides of the alkali metals and the earth alkaline metals, in particular the hydroxides and carbonates of Na and K.

In yet another embodiment at least part of the catalyst is present in the form of poultry manure, which is a valuable source of K₂O. As available from poultry farms, poultry manure is typically mixed with a litter material, such as saw dust or peanut shells. The litter material is itself a ligno-cellulosic biomass material, which is converted in the process together with the biomass feedstock.

Step (i) is suitably carried out at a temperature between 200 °C and 500 °C. It is generally desirable to operate in the lower end of this temperature range, as the resulting bio-crude tends to be of a better quality. However, considerations of conversion and coke yield may make higher pyrolysis temperatures more desirable in particular circumstances.

It is desirable to obtain a bio-crude having a lower oxygen content than the bio-mass from which it is prepared. If the oxygen content of the biomass is O_{bm} and the oxygen content of the bio-crude is O_{bc}, O_{bc} Should be <0.5 O_{bm}, preferably <0.25 O_{bm}, more preferably <0.1 O_{bm}.

The process is particularly suitable for the conversion of ligno-cellulosic biomass, such as wood, straw, grass, bagasse, corn husks, and the like.

The process is suitably carried out continuously. The term "continuous process" as used herein refers to a process wherein feed material is introduced in a systematic manner in order to maintain equilibrium conditions. In general, in a continuous process, products and by-products are continuously removed from the process in order to maintain a steady state. For continuous operation of the process of the invention it is desirable to remove "ash" from the process. The term "ash" as used herein refers to inorganic material present in the biomass feedstock. Certain components of the ash are valuable catalytic materials. Examples include K and Na. These materials may be recovered from the ash and recycled into the pyrolysis reaction. Excess ash may be removed for use as a fertilizer, for example.
Table I, based on data from UOP LLC of Des Plaines, IL, USA, compares the vital statistics of feedstocks from varying origins.

**TABLE I**

| | Crude (typical) | Resid | Soy oil | Yellow grease | Pyrolysis oil |
|---|---|---|---|---|---|
| %C | 83-86 | 84.9 | 77.6 | 76.4 | 56.2 |
| %H | 11-14 | 10.6 | 11.7 | 11.6 | 6.6 |
| %S | 0-4 (1.8 avg.) | 4.2 | 0.000 6 | 0.04 | - |
| %N | 0-1 (0.1 avg.) | 0.3 | 0.001 1 | 0.03 | 0.3 |
| %O | - | - | 10.4 | 12.1 | 36.9 |
| H/C | 1.8-1.9 | 1.5 | 1.8 | 1.8 | 1.4 |
| Density | 0.86 (avg.) | 1.05 | 0.92 | 0.89 | 1.23 |
| TAN | <1 | <1 | 2 | 30 | 78 |
| ppm alkali metals | 60 | 6 | 100 | 100 | 100 |
| Heating value, kJ/kg | 41,800 | 40,700 | 37,200 | 37,200 | 15,200 |

As can be seen, as compared to the other feedstocks, pyrolysis oil is characterized by a high oxygen content, a high TAN, and a low heating value.

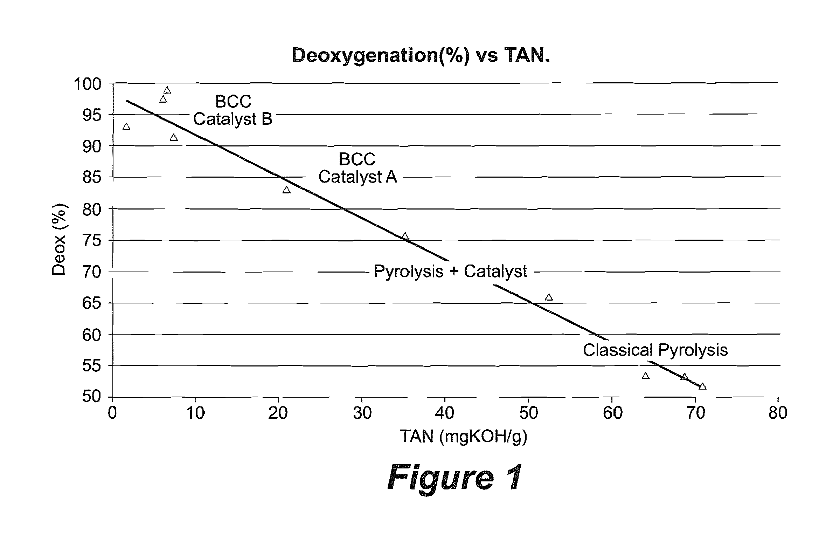

Figure 1 shows the degree of deoxygenation and the TAN values of various biomass pyrolysis products. As can be seen, there is a strong correlation between the degree of deoxygenation and the TAN value. Classical pyrolysis (no catalyst, using sand as heat carrier) results in a pyrolysis oil having a degree of deoxygenation of about 50%, and a TAN of about 70 (in line with the value reported by UOP LLC). Pyrolysis in the presence of a basic microspheric catalyst results in about 75% deoxygenation, and a TAN of about 35.

Use of particulate catalysts applied according to this invention results in deoxygenation of 80% or more, and a TAN of 20 or less.

The results were obtained with pyrolysis at 500 °C. Detailed results are collected in Table II

**TABLE II**

| A: Particulate or Impregnated Catalyst | | | | | | |
|---|---|---|---|---|---|---|
| B: Microsphere Catalyst | | | | | | |
| Wood type | Catalyst A/B | Coke yield (%) | CO₂ yield (%) | H₂O yield (%) | pH | TAN |
| Sawdust <250 | -/sand | 18.6 | 8.3 | 19.1 | 3.3 | 71 |
| Sawdust <250 | -/htc | 27.9 | 15.7 | 19.9 | 3.7 | 52 |
| Sawdust <850 | -/sand | 22.4 | 9.3 | 18.6 | 3.0 | 68 |
| Sawdust <850 | -/sand | 21.8 | 10.5 | 17.2 | 3.0 | 64 |
| Sawdust <850 | Na₂CO₃/htc | 18.6 | 25.1 | 30.5 | 4.2 | 6 |
| Sawdust <850 | Na₂CO₃/htc | 21.3 | 23.3 | 28.0 | 4.0 | 7 |
| Pine < 10 mcm | -/htc | 24.1 | 12.8 | 26.9 | 3.3 | 35 |
| Pine < 10 mcm | htc/htc | 29.3 | 13.6 | 32.0 | 3.9 | 21 |
| Pine < 10 mcm | Na₂CO₃/htc | 26.8 | 21.2 | 33.7 | 4.4 | 5 |
| Sawdust <250 | K₂CO₃/htc | 27.6 | 26.5 | 26.6 | 8.3 | 1 |

| | | | | | | |
|---|---|---|---|---|---|---|
| htc = hydrotalcite | | | | | | |

Use of the combined catalyst (particulate salt + hydrotalcite) results in a pH of greater than 3.5 and a TAN of less than 10.

The TAN of the bio-crude may be reduced further by one or a combination of the following measures. Firstly, acid present in the bio-crude may be neutralized by adding a base. Although this has the desired effect of reducing the TAN and increasing the pH, this measure does not further reduce the oxygen content of the bio-crude, and may therefore not be preferred in all cases. Also some yield loss may occur.

Secondly, the TAN of a bio-crude may be reduced by contacting the bio-crude with an adsorbent, for instance comprising an anionic clay, using the method disclosed in WO 2006/037368. This process removes acid from the bio-crude by adsorption, resulting in a loss of feedstock, and, and may therefore not be preferred in all cases.

Thirdly, the bio-crude may be subjected to a further deoxygenation step. Reduction with hydrogen is an example of such a step. Although very effective, this method tends to be expensive due to the cost of hydrogen. An alternate reducing agent is methane, which may be abundantly available as it is a common degradation product of many biomass materials.

It has now been discovered that coke or char formed during the pyrolysis may effectively be used as a reducing agent. Coke tends to deposit onto the particulate catalyst material, and may be introduced into the pyrolysis reaction together with the particulate catalyst material.

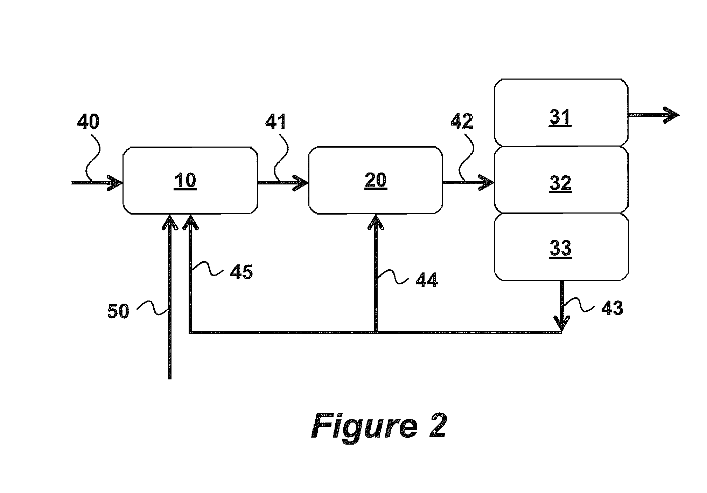

An example of a coke-reduction embodiment is shown in Figure 2. Unit 10 is a biomass/catalyst pre-contacting means. Biomass 40 and catalyst stream 50 are introduced into pre-contacting means 10. Preferably, mechanical action is exerted onto the biomass and the particulate catalyst in pre-contacting means 10. Mechanical action may comprise milling, grinding, kneading, etc. The temperature in pre-contacting means is kept below 200 °C, so that virtually no pyrolysis takes place at this stage.

The biomass/catalyst mixture 41 is transferred to biomass catalytic cracking (BCC) unit 20. Heat is added in the form of hot catalyst stream 44, to raise the temperature to the desired pyrolysis temperature (between 200 and 500 °C). Product stream 42 is transferred to product/catalyst separation unit 32. Product is separated into fluid (bio-crude) and gaseous product in unit 31.

Recovered catalyst is regenerated in regenerator 33. Regeneration involves burning off coke or char. However, care is taken to leave some coke on the catalyst particles, for example about 1 % by weight of the catalyst. Accordingly, coke is introduced into the pyrolysis reactor 20 via catalyst streams 44 and 45. The coke is a reducing agent for the bio-crude formed in the reactor 20.

Flue gas from regenerator 33 may contain significant amounts of CO, which also is a reducing agent. Flue gas may be blended with fluidizing gas 50, so that CO present in the blend contributes to the deoxygenation of bio-crude formed in reactor 20.

As shown in Figure 2, fluidization gas 50 may be added to pre-contacting means 10, where it pre-heats and dries the biomass. Alternately, fluidization gas 50 may be added to reactor 20, or may be split between pre-contacting means 10 and reactor 20.

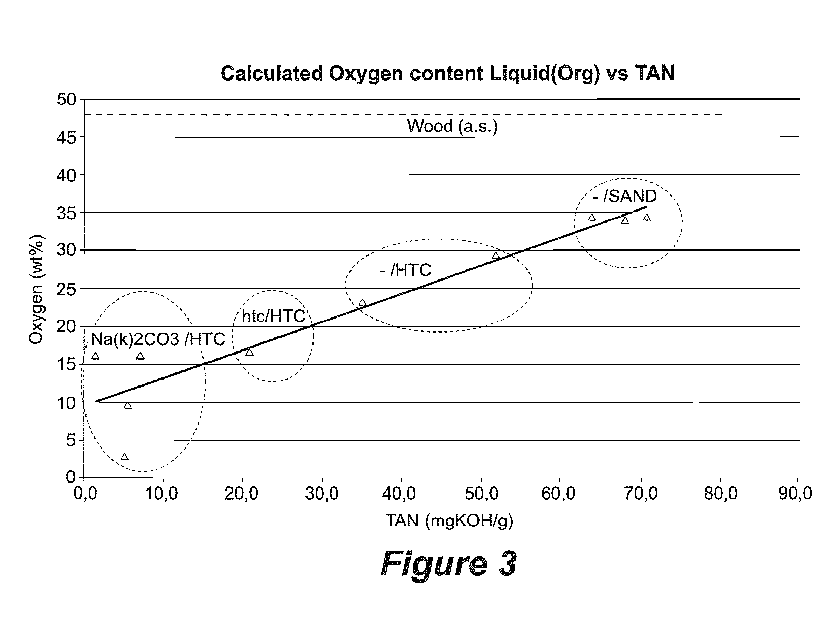

Figure 3 shows the correlation between TAN and oxygen content of various wood pyrolysis products. Wood itself has an oxygen content of about 48%. Pyrolysis using sand as a heat carrier produces a biocrude having an oxygen content of about 35% and a TAN vale of about 70 mg KOH/g. Using hydrotalcite (HTC) as a single catalyst produces a biocrude having an oxygen content in the range of 23-29%, and corresponding TAN values of about 25 and 53 mg KPG/g, respectively. The combined catalyst Na₂CO₃ + HTC and K₂CO₃ + HTC produce biocrudes having oxygen contents in the range of 3% to 17%, and TAN values in the range of 2 to 9 mg KOH/g.

Many modifications in addition to those described above may be made to the structures and techniques described herein without departing from the spirit and scope of the invention. Accordingly, although specific embodiments have been described, these are examples only and are not limiting upon the scope of the invention.

In a separate embodiment, the particulate catalyst is wholly or partly dissolved in a solvent and contacted with the solid biomass and optionally a particulate or microspheric catalyst support in a separate vessel and/or reactor prior to the pyrolysis. In a preferred embodiment the temperature of the vessel is above the boiling temperature of the solvent, but below 250 °C.

## Claims

1. A bio-crude suitable for processing in conventional refinery equipment **characterized in that** the Total Acid Number (TAN) of the bio-crude is less than 10.

2. A bio-crude according to claim 1 suitable for processing in stainless steel equipment.

3. The bio-crude of claim 1-2 **characterized in that** the TAN is less than 5.

4. The bio-crude of claim 1 -3 **characterized in that** the TAN is less than 1.

5. The bio-crude of any one of the preceding claims having a pH of greater than 3.5.

6. The bio-crude of any one of the preceding claims suitable for processing in conventional refinery equipment.

7. A process for preparing the bio-crude of any one of the preceding claims, said process comprising the steps of (i) pyrolyzing a biomass material in the presence of a catalyst to form a bio-crude; and (ii) optionally reducing the TAN of the bio-crude by adding a base.

8. The process of claim 7 wherein the catalyst comprises a particulate inorganic material.

9. The process of claim 7 or 8 wherein the catalyst comprises a salt of an alkali metal or an earth alkaline metal.

10. The process of claim 9 wherein the salt is in a particulate form.

11. The process of claim 9 or 10 wherein the salt comprises K and or Na.

12. The process of any one of claims 9 through 11 wherein the salt comprises CO₃²⁻.

13. The process of any one of the preceding claims wherein the particulate catalyst is wholly or partly dissolved in a solvent and contacted with the solid biomass and optionally a particulate or microspheric catalyst in a separate vessel and/or reactor prior to the pyrolysis.

14. The process of any one of claims 7 through 13 wherein the catalyst comprises a hydrotalcite, or a mixed metal oxide or mixed metal carbonate derived therefrom.

15. The process of any one of claims 7 through 14 wherein the catalyst comprises a Na or K hydroxide or salt and a basic catalyst.

16. The process of any one of claims 7 through 15 wherein step (i) is carried out at a temperature between 200 °C and 500 °C.

17. The process of any one of claims 7 through 16 whereby the biomass has an oxygen content of O_{bm}, the bio-crude has an oxygen content of O_{bc}, and O_{bc} < 0.5 O_{bm}.

18. The process of claim 17 whereby O_{bc} < 0.25 O_{bm}.

19. The process of claim 18 whereby O_{bc} < 0.1 O_{bm}.

20. The process of any one of claims 7 through 19 wherein the biomass is a ligno-cellulosic biomass.

21. The process of claim 20 wherein the biomass is selected from the group consisting of wood, straw, grass, bagasse, corn husks, peanut shells, and mixtures thereof.

22. The process of any one of claims 7 through 21 comprising the additional step of (iii) converting the bio-crude to a liquid fuel in a conventional refinery process unit.

23. The process of claim 22 wherein the bio-crude is blended with a hydrocarbon feed of mineral origin prior to step (iii).

24. The process of any one of claims 7 - 23 which is conducted continuously.
